**Europäisches Patentamt**

**European Patent Office**

**Office européen des brevets**

(19)

(11) Numéro de publication : **0 429 625 B1**

(12) # FASCICULE DE BREVET EUROPEEN

(45) Date de publication du fascicule du brevet :
06.09.95 Bulletin 95/36

(51) Int. Cl.⁶ : **H02K 1/12, H02K 37/12**

(21) Numéro de dépôt : **90909752.9**

(22) Date de dépôt : **15.06.90**

(86) Numéro de dépôt international :
**PCT/FR90/00436**

(87) Numéro de publication internationale :
**WO 90/16107 27.12.90 Gazette 90/29**

(54) **ACTIONNEUR ELECTROMAGNETIQUE MONOPHASE DE FAIBLE ENCOMBREMENT.**

(30) Priorité : **16.06.89 FR 8908052**

(43) Date de publication de la demande :
**05.06.91 Bulletin 91/23**

(45) Mention de la délivrance du brevet :
**06.09.95 Bulletin 95/36**

(84) Etats contractants désignés :
**CH DE ES FR GB IT LI NL**

(56) Documents cités :
**CH-A- 549 308
DE-B- 2 254 897
DE-C- 972 659
FR-A- 2 071 121**

(73) Titulaire : **MOVING MAGNET TECHNOLOGIES S.A.**
**12, rue du Capitaine-Arrachart**
**F-25000 Besançon (FR)**

(72) Inventeur : **OUDET, Claude**
**12, rue du Capitaine-Arrachart**
**F-25000 Besançon (FR)**
Inventeur : **PRUDHAM, Daniel**
**90, rue des Bois-Murés**
**F-25220 Thise (FR)**

(74) Mandataire : **Kopacz, William James**
**D.L. SEE**
**c/o CNIT WORLD TRADE CENTER 2**
**B.P. 434**
**F-92053 Paris La Défense (FR)**

EP 0 429 625 B1

## Description

La présente invention concerne un actionneur électromagnétique monophasé pour le déplacement d'un organe mobile sur une course limitée et présentant une zone de couple constant étendue, comportant un rotor disposé dans un entrefer d'une structure statorique formée par un premier circuit magnétique comportant 2N pôles et au moins une bobine d'excitation, et un deuxième circuit magnétique. Les circuits magnétiques sont réalisés en un matériau de très haute perméabilité magnétique. Le rotor présente une partie mince aimantée constituée de 2N paires de pôles minces aimantés transversalement en sens alterné. L'aimantation est pratiquement uniforme et s'étend sur une longueur $Y_A$ mesurée selon le chemin de déplacement. De tels actionneurs sont destinés en particulier à des actionneurs rotatifs ou encore à des indicateurs de tableau de bord. Ces actionneurs présentent la particularité de posséder une grande zone dans laquelle la force est constante. De ce fait, il est possible de réaliser des actionneurs ayant une très grande reproductibilité et une très grande précision angulaire par asservissement. De tels actionneurs présentent néanmoins un inconvénient pour des applications dans lesquelles une miniaturisation poussée est recherchée. En effet, la zone à force constante n'existe, selon l'enseignement de l'état de la technique, que si le circuit magnétique est fermé. Pour cela, le premier circuit magnétique et le second circuit magnétique sont dans tous les cas réunis par une pièce magnétique disposée à l'extérieur du chemin parcouru par l'organe mobile. Cette pièce magnétique réunissant les circuits magnétiques doit présenter une dimension suffisante pour permettre le passage des flux magnétiques et représente donc un encombrement supplémentaire préjudiciable.

Le document DE-C-972 659 décrit un moteur pas-à-pas dont le stator comprend deux circuits magnétiques. Cependant il ne mentionne pas de façon claire et suffisante l'isolation magnétique des deux circuits magnétiques.

L'objet de la présente invention est de réaliser un actionneur électromagnétique monophasé présentant les mêmes qualités de reproductibilité et de précision angulaire, d'un encombrement réduit.

La présente invention est caractérisée par le fait que les deux circuits magnétiques sont reliés uniquement par des entretoises non magnétiques, et en ce que N est inférieur $\frac{\pi D}{8E}$, E étant l'épaisseur de l'entrefer entre les deux circuits magnétiques et D étant le diamètre moyen de la structure statorique. Dans ces conditions, la demanderesse a pu réaliser, de façon surprenante et contrairement à tout enseignement de l'état de l'art, un actionneur électromagnétique dans lequel existe une zone étendue à force constante.

Selon un premier mode de réalisation, l'actionneur comporte un rotor tubulaire aimanté radialement et présentant 2N paires de pôles alternés, le rapport entre l'épaisseur E et l'entrefer et la longueur Y desdits pôles mesurée sur la circonférence du rotor étant inférieur à 0,25. La structure statorique est constituée par un premier circuit magnétique entourant le rotor et présentant 2N parties polaires excitées par les bobines électriques, et par un deuxième circuit magnétique constitué par un cylindre plein disposé à l'intérieur du rotor, le rotor et les deux circuits magnétiques étant coaxiaux. On peut réaliser, en choisissant des cylindres de très faible hauteur, des indicateurs extrêmement plats ou des actionneurs de très faible encombrement.

Selon une variante avantageuse, les paires de pôles magnétiques du rotor sont solidaires du circuit magnétique. Le deuxième circuit magnétique constitue ainsi un support du rotor, relativement fragile, et peut supporter l'axe d'utilisation de l'actionneur.

Selon un autre mode de réalisation, le rotor est constitué par un disque mince divisé en 2N secteurs angulaires aimantés transversalement dans des sens alternés, le rotor pouvant tourner autour d'un axe central entre un premier circuit magnétique constitué par 2N secteurs angulaires entourés par des bobines d'excitation et par un deuxième circuit magnétique constitué par un disque coaxial avec le rotor et le deuxième circuit magnétique.

De préférence, l'épaisseur du deuxième circuit magnétique est au moins égale à $0,4 \times \frac{B0}{B_{sat}} \times \frac{D^2 - d^2}{D_{stat}}$. B0 représente l'induction de l'aimant, $B_{sat}$ représente l'induction à saturation dans le fer, D représente le diamètre extérieur de la partie aimantée de l'aimant, d représente le diamètre intérieur de la partie aimantée située dans l'entrefer, et Dstat correspond au diamètre extérieur du deuxième circuit magnétique qui peut être plus grand que D. Le deuxième circuit magnétique ainsi réalisé permet un passage optimal des flux magnétiques. La zone à force constante est ainsi la plus étendue possible.

Selon un mode de réalisation particulier le deuxième circuit magnétique est collé sur le rotor. On constitue ainsi un ensemble rotor-deuxième circuit magnétique d'une grande rigidité pouvant être utilisé en particulier comme indicateur de tableau de bord.

Selon un mode de réalisation particulier, de la présente invention, l'un au moins des circuits magnétiques présente le long de l'une au moins de ses arêtes polaires un chanfrein ou un bord incliné. Par bord incliné il faut entendre que, dans le cas d'une réalisation dans laquelle le rotor est constitué par un disque, le bord de l'une au moins des pièces polaires forme avec une droite radiale séquente un angle compris entre 0 et 10°, et dans le cas d'une réalisation de type cylindrique que le bord de l'une au moins des pièces polaires forme un angle compris entre 0 et 10° avec une génératrice sécante.

Dans ce mode de réalisation particulier, on maîtrise l'effet de verrouillage du rotor en l'absence de courant électrique, lorsque le courant électrique a amené le rotor dans une position dans laquelle l'un des bords de la partie aimantée coopère avec le chanfrein ou le bord incliné. De préférence, le chanfrein forme avec le plan du rotor un angle compris entre 30 et 60°. La largeur du chanfrein est avantageusement comprise entre 1/5 et 1/20 de la longueur du pôle développé.

Selon un mode de réalisation particulier, l'un des pôles magnétiques de la structure statorique est entouré par une bobine d'asservissement délivrant un signal d'asservissement.

La présente invention sera mieux comprise dans la description qui suit, ou s'appuyant sur les dessins où :

- la figure 1 représente une vue en coupe d'un actionneur rotatif,
- la figure 2 représente une vue en coupe médiane du premier circuit magnétique dudit actionneur rotatif,
- la figure 3 représente une vue en coupe d'un deuxième mode de réalisation,
- la figure 4 représente la vue du premier circuit magnétique correspondant à cette variante,
- les figures 5 à 9 représentent différentes variantes de bobinage d'un actionneur rotatif représenté en figure 4.

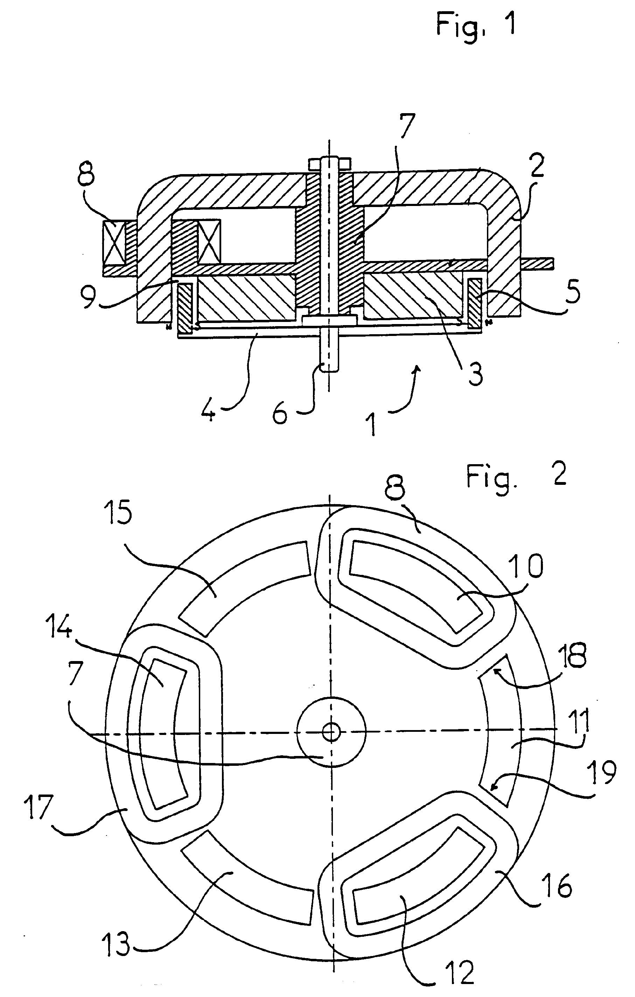

L'actionneur représenté en figure 1 comporte un rotor cylindrique (1) et une structure statorique composée par un premier circuit magnétique (2) et par un deuxième circuit magnétique (3). Le rotor (1) est constitué par une jante rigide (4) sur laquelle est fixé un aimant mince de forme cylindrique (5). Cet aimant mince présente six parties polaires aimantées transversalement, en sens alterné. Le rotor (1) est monté sur un axe (6) guidé par un palier (7), par exemple une douille à billes. Le premier circuit magnétique (2) est constitué par une pièce réalisée en un matériau de très haute perméabilité magnétique, emboutie pour arriver à une forme de cuvette. Le premier circuit magnétique présente six parties polaires. Des bobines électriques (8) sont disposées autour des pôles magnétiques du premier circuit magnétique. Le deuxième circuit magnétique (3) est constitué par un disque réalisé en un matériau de très haute perméabilité magnétique. Il définit, avec le premier circuit magnétique (2), un entrefer (9) dans lequel se déplace le cylindre aimanté (5).

La figure 2 représente une vue du premier circuit magnétique. On distingue six pôles magnétiques (10 à 15) ainsi que des bobines électriques (8, 16, 17) . Les bobines (8 et 16) sont des bobines d'excitation alors que la bobine (17) est une bobine d'asservissement délivrant un signal électrique à un circuit électronique. Le pôle magnétique (11) présente deux arêtes latérales chanfreinées (18, 19). Comme on peut le constater sur la figure 1, le premier circuit magnétique (2) et le deuxième circuit magnétique (3) ne sont pas réunis par des pièces magnétiques mais seulement par des pièces de liaison non magnétiques (20).

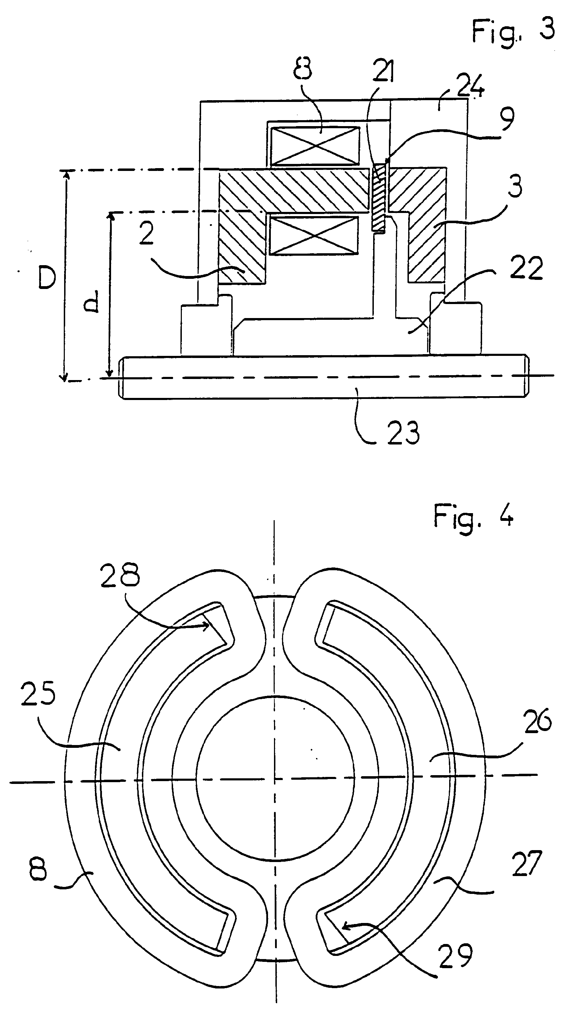

Dans le mode de réalisation illustré en figure 3, le rotor est constitué par une partie aimantée circulaire (21) montée sur jante rigide (22) non magnétique coopérant avec un axe (23). La partie aimantée circulaire (21) est divisée en deux pôles aimantés transversalement, en sens alterné. Le diamètre extérieur de la partie aimantée D et le diamètre intérieur d correspondent à la partie aimantée placée à l'intérieur de l'entrefer (9). La structure statorique est constituée par un premier circuit magnétique (2) et par un deuxième circuit magnétique (3). Le premier circuit magnétique (2) est constitué par un cylindre présentant selon deux génératrices opposées une encoche permettant le passage de la bobine d'excitation (8). Le deuxième circuit magnétique (3) est constitué par un cylindre plein présentant, selon deux génératrices, symétriquement par rapport aux encoches de passage de la bobine (8), un usinage évitant le déséquilibre des forces s'exerçant sur la partie aimantée (21). Les deux circuits magnétiques (2, 3) sont réunis uniquement par le boîtier (24) en matière non magnétique.

La figure 4 représente une vue en coupe médiane du premier circuit magnétique. On distingue une première partie polaire (25) constituée par un secteur angulaire d'un cylindre et une deuxième partie polaire (26) symétrique. Le bobinage (8) est disposé autour de la première partie polaire (25). Un deuxième bobinage (27) symétrique au premier bobinage (8) engendre sur le pôle (26) une polarité opposée à celle du premier pôle (25). Chacune des parties polaires (25, 26) présente un bord latéral respectivement (28, 29) incliné. Ces bords inclinés permettent de régler la force de verrouillage du rotor lorsque la jonction entre les deux parties polaires de la partie aimantée (21) se trouvent dans la zone dans laquelle règne une force de détente.

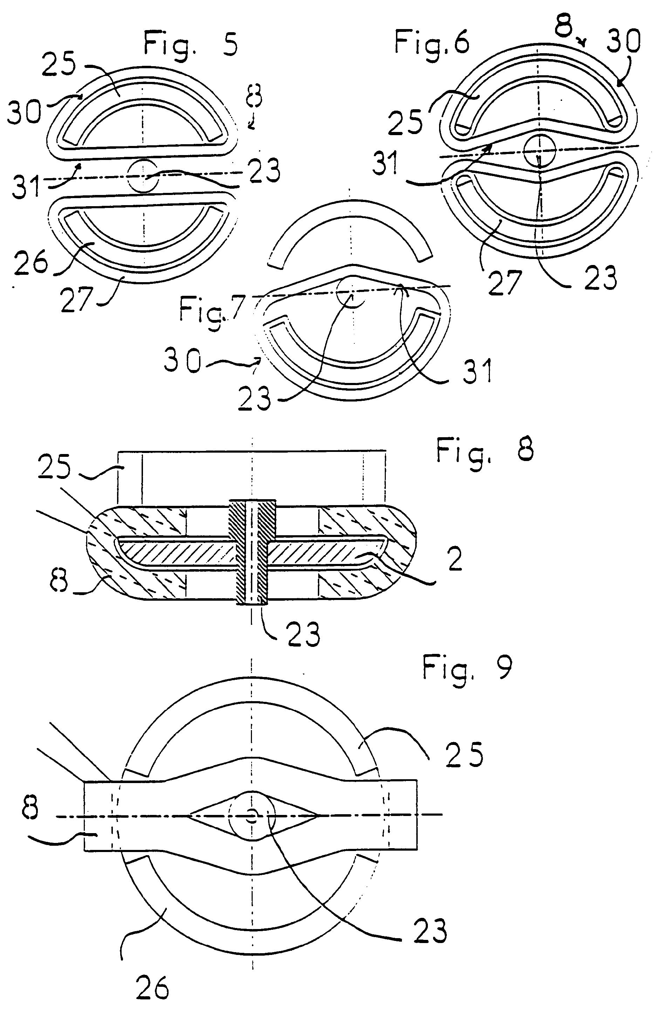

Dans le mode de bobinage représenté en figure 5, les bobines (8, 27) sont disposées dans le plan transversal, autour des circuits magnétiques respectivement (25, 26). Le bobinage présente une partie active (30) s'étendant suivant un arc de cercle suivant de très près le circuit magnétique (25). La liaison s'effectue suivant un segment linéaire (31) rejoignant les deux extrémités de la partie active (30). Ce segment de bobinage (31) passe de part et d'autre de l'axe (23). Si les circuits magnétiques (25, 26) s'étendent sur un secteur angulaire plus important, ou si le diamètre de l'axe (23) interdit le mode de réalisation représenté en figure 5, le bobinage peut être réalisé comme représenté en figure 6 ou en figure 7. En figure 6, les deux extrémités de la partie active (30) du bobinage (8) sont reliés par un segment (31) formant sensiblement un arc de cercle contournant par l'extérieur l'axe (23). Dans le mode de réalisation représenté en figure 7, la partie de liaison (31) contourne l'axe (23) par l'extérieur.

Selon un autre mode de réalisation représenté en figure (8), le bobinage s'effectue non pas dans le plan médian des circuits magnétiques mais dans le plan transversal. Le bobinage (8) passe à travers les encoches séparant les deux pôles (25, 26) du circuit magnétique (2) et passe alternativement de part et d'autre de l'axe (23) comme presenté en figure 9. Il est bien entendu que ces exemples de bobinage sont décrits à titre d'exemple et ne constituent en aucune façon l'énumération exaustives des solutions envisageables.

## Revendications

1. Actionneur électromagnétique monophasé pour le deplacement d'un organe mobile sur une course limitée et présentant une zone de couple constant étendue, comportant un rotor disposé dans l'entrefer de la structure statorique, formé par un premier circuit magnétique (2) comportant 2N pôles et au moins une bobine d'excitation (8), et un deuxième circuit magnétique (3), lesdits circuits magnétiques (2, 3) étant réalisés en un matériau de très haute perméabilité magnétique, le rotor présentant une partie mince (5) aimantée constituée de 2N paires de pôles aimantés transversalement, en sens alterné, l'aimantation étant pratiquement uniforme et s'étendant sur un chemin $Y_A$ mesuré le long du chemin de déplacement, caractérisé en ce que le premier circuit magnétique (2) est relié au second circuit magnétique (3) uniquement par des pièces de liaison non magnétiques et en ce que N est inférieur à $\frac{\pi D}{8E}$, E étant l'épaisseur de l'entrefer mesurée entre les deux circuits magnétiques et D étant le diamètre moyen de la structure statorique.

2. Actionneur électromagnétique monophasé selon la revendication 1, caractérisé en ce qu'il comporte un rotor tubulaire (5) aimanté radialement, et présentant 2N paires de pôles alternés, le rapport entre l'épaisseur E de l'entrefer desdits pôles et la longueur Y desdits pôles mesurée sur la circonférence du rotor étant inférieur à 0,25, et en ce que la structure statorique est constituée par un premier circuit magnétique (2) entourant le rotor et présentant 2N parties polaires (10 à 15) excitées par des bobines électriques (8, 16) et par un deuxième circuit magnétique (3) constitué par un cylindre plein disposé à l'intérieur du rotor, le rotor et les deux circuits magnétiques étant coaxiaux.

3. Actionneur électromagnétique monophasé selon la revendication 2, caractérisé en ce que les paires de pôles magnétiques du rotor sont solidaires du deuxième circuit magnétique (3).

4. Actionneur électromagnétique monophasé selon la revendication 1, caractérisé en ce que le rotor est constitué par un disque mince (9) divisé en 2N secteurs angulaires aimantés transversalement en sens alterné, ledit rotor étant mobile entre un premier circuit magnétique (2) constitué par 2N secteurs angulaires (25, 26) entouré, pour au moins certains d'entre eux, par des bobines d'excitation (8) et par un deuxième circuit magnétique (3) coaxial avec le rotor.

5. Actionneur électromagnétique monophasé selon la revendication 4, caractérisé en ce que l'épaisseur du deuxième circuit magnétique est au moins égale à $\frac{B0}{B_{sat}} \times \frac{D^2 - d^2}{D_{stat}} \times 0,4$ où B0 représente l'induction de l'aimant, $B_{sat}$ représente l'induction à saturation dans le fer, D représente le diamètre extérieur de la partie aimantée de l'aimant, d représente le diamètre intérieur de la partie aimantée située dans l'entrefer, et $D_{stat}$ correspond au diamètre extérieur du deuxième circuit magnétique qui peut être plus grand que D.

6. Actionneur électromagnétique monophasé selon l'une quelconque des revendications 4 ou 5, caractérisé en ce que le deuxième circuit magnétique (3) est solidaire du rotor (21).

7. Actionneur électromagnétique monophasé selon l'une quelconque des revendications précédentes, caractérisé en ce que l'un au moins des circuits magnétiques présente le long de l'une au moins de ses arêtes polaires un chanfrein ou un bord incliné.

8. Actionneur électromagnétique monophasé selon la revendication 7, caractérisé en ce que chacun des secteurs du premier circuit magnétique présente au moins une arête radiale présentant un chanfrein formant avec le plan du rotor un angle compris entre 30° et 60°.

9. Actionneur électromagnétique monophasé selon la revendication précédente, caractérisé en ce que la largeur du chanfrein est comprise entre 1/5 et 1/20 de la longueur du pôle développé.

10. Actionneur électromagnétique monophasé selon l'une quelconque des revendications précédentes, caractérisé en ce que N est supérieur à 1, l'un des deux circuits magnétiques au moins comportant en outre une bobine d'asservissement (27) non parcourue par le courant et non influencée par le flux dû au courant des autres bobines.

11. Actionneur électromagnétique monophasé selon l'une quelconque des revendications 1 à 10, caractérisé en ce que l'un des éléments magnétiques comporte une bobine d'asservissement.

**Patentansprüche**

1. Einphasiges elektromagnetisches Betätigungsgerät zur Verstellung eines mobilen Organs auf einem begrenzten Weg mit einer breiten Zone konstanter Kraft, umfassend einen Rotor, der im Luftspalt einer Statorstruktur angeordnet ist, welche von einem ersten Magnetkreis (2) mit 2N Polen und mindestens einer Erregerwicklung (8) und von einem zweiten Magnetkreis (3) gebildet ist, wobei beide Magnetkreise (2, 3) aus einem Material mit sehr hoher magnetischer Permeabilität ausgeführt sind und der Rotor einen dünnen magnetisierten, aus 2N Paaren alternierend angeordneten, quer magnetisierten Polen bestehenden Abschnitt (5) aufweist, wobei die Magnetisierung praktisch gleichmäßig ist und sich über einen Weg $Y_A$ gemessen entlang des Verstellwegs erstreckt,
dadurch gekennzeichnet,
daß der erste Magnetkreis (2) mit dem zweiten Magnetkreis (3) einzig über nicht magnetische Verbindungsteile verbunden ist und daß N kleiner ist als $\pi D/8E$, wobei E die Dicke des Luftspalts zwischen den beiden Magnetkreisen und D den mittleren Durchmesser der Statorstruktur darstellt.

2. Einphasiges elektromagnetisches Betätigungsgerät gemäß Anspruch 1,
dadurch gekennzeichnet,
daß es einen röhrenförmigen, radial magnetisierten Rotor (5) mit 2N Paar alternierend angeordneten Polen aufweist, wobei das Verhältnis der Dicke E des Luftspalts zwischen den Polen zu der am Umfang des Rotors gemessenen Länge Y der Pole kleiner 0,25 ist, und
daß die Statorstruktur besteht aus einem ersten, den Rotor umgebenden Magnetkreis (2), welcher 2N von elektrischen Wicklungen (8, 16) erregte Polteile (10 bis 15) aufweist, und einem zweiten Magnetkreis (3) bestehend aus einem innerhalb des Rotors angeordneten massiven Zylinder, wobei der Rotor und die beiden Magnetkreise koaxial sind.

3. Einphasiges elektromagnetisches Betätigungsgerät gemäß Anspruch 2,
dadurch gekennzeichnet,
daß die magnetischen Polpaare des Rotors mit dem zweiten magnetischen Schaltkreis (3) zusammenwirken.

4. Einphasiges elektromagnetisches Betätigungsgerät gemäß Anspruch 1,
dadurch gekennzeichnet,
daß der Rotor aus einer dünnen Scheibe (9) besteht, die in 2N alternierend angeordnete, quer magnetisierte Winkelabschnitte eingeteilt ist, wobei der Rotor zwischen einem ersten Magnetkreis (2), der aus 2N zumindest teilweise mit Erregerwicklungen (8) umgebenen Winkelabschnitten (25, 26) besteht, und einem mit dem Rotor koaxial angeordneten zweiten Magnetkreis (3) bewegbar ist.

5. Einphasiges elektromagnetisches Betätigungsglied gemäß Anspruch 4,
dadurch gekennzeichnet,
daß die Dicke des zweiten Magnetkreises mindestens

$$\frac{B0}{B_{sat}} \times \frac{D^2 - d^2}{D_{stat}} \times 0,4$$

beträgt, wobei
B0 die Induktion des Magnets,
$B_{sat}$ die Sättigungsinduktion im Eisen,
D den Außendurchmesser des magnetisierten Teils des Magnets,
d den Innendurchmesser des im Luftspalt angeordneten magnetisierten Teils und
$D_{stat}$ den Außendurchmesser des zweiten Magnetkreises darstellt, wobei Dstat größer als D sein kann.

6. Einphasiges elektromagnetisches Betätigungsgerät gemäß einem der Ansprüche 4 oder 5,
dadurch gekennzeichnet,
daß der zweite Magnetkreis (3) mit dem Rotor (21) zusammenwirkt.

7. Einphasiges elektromagnetisches Betätigungsgerät gemäß einem der vorstehenden Ansprüche,
dadurch gekennzeichnet,
daß mindestens einer der Magnetkreise entlang mindestens einem seiner Polgrate eine Fase oder eine schräge Kante aufweist.

8. Einphasiges elektromagnetisches Betätigungsgerät gemäß Anspruch 7,
dadurch gekennzeichnet,
daß jeder Abschnitt des ersten Magnetkreises mindestens eine radiale Kante mit einer Fase aufweist, die mit der Rotorebene einen Winkel zwischen 30 und 60° bildet.

9. Einphasiges elektromagnetisches Betätigungsgerät gemäß dem voranstehenden Anspruch, dadurch gekennzeichnet, daß die Breite der Fase zwischen 1/5 und 1/20 der Länge des abgewickelten Pols beträgt.

10. Einphasiges elektromagnetisches Betätigungsgerät gemäß einem der voranstehenden Ansprüche, dadurch gekennzeichnet, daß N größer als 1 ist, wobei mindestens einer der beiden Magnetkreise überdies eine Regelungswicklung (27) aufweist, die nicht stromdurchflossen und nicht vom Fluß aus den anderen Wicklungen beeinflußt ist.

11. Einphasiges elektromagnetisches Betätigungsgerät gemäß einem der Ansprüche 1 bis 10, dadurch gekennzeichnet, daß eines der magnetischen Elemente eine Regelungswicklung aufweist.

## Claims

1. An electromagnetic one-phase actuator for displacing a movable member along a limited travel and having an extended constant torque region, including a rotor arranged in the gap of the statoric structure, formed of a first magnetic circuit (2) having 2N poles and at least an excitating coil (8) and a second magnetic circuit (3), said magnetic circuits (2, 3) being made from very high magnetic permeability material, said rotor including a thin magnetized portion (5) comprising 2N pairs of alternately transversally magnetized poles, with said magnetization being substantially uniform and extending on a path $Y_A$ as measured along the displacement path, characterized in that said first magnetic circuit (2) is connected to said second magnetic circuit (3) only by non-magnetic linking parts and in that N is lower than $\frac{\pi D}{8E}$, with E being the gap thickness as measured between both magnetic circuits and D the mean diameter of said statoric structure.

2. The electromagnetic one-phase actuator of claim 1, characterized in that it includes a radially magnetized tubular rotor (5) and provided with 2N pairs of alternate poles, the ratio between the thickness E of said poles gap and the length Y of said poles as measured on the rotor circumference being lower than .25, and in that said statoric structure includes a first magnetic circuit (2) which surrounds said rotor and provided with 2N polar portions (10-15) excited by electric coils (8, 16) and a second magnetic circuit (3) comprising a solid cylinder arranged inside said rotor, with said rotor and both magnetic circuits being coaxially arranged.

3. The electromagnetic one-phase actuator of claim 2, characterized in that said pairs of rotor magnetic poles are integral with said second magnetic circuit (3).

4. The electromagnetic one-phase actuator of claim 1, characterized in that said rotor includes a thin disc (9) which is divided into 2N angular alternately transversally magnetized sectors, said rotor being movable between a first magnetic circuit (2) provided with 2N angular sectors (25, 26) surrounded, for at least some of them, by excitating coils (8) and a second magnetic circuit (3) coaxially arranged with said rotor.

5. The electromagnetic one-phase actuator of claim 4, characterized in that the thickness of said second magnetic circuit is at least equal to $\frac{B0}{Bsat} \times \frac{D^2 - d^2}{D_{stat}} \times .4$, wherein B0 stands for the magnet inducttion, $B_{sat}$ stands for the saturation induction into the iron, D stands for the external diameter of the magnetized portion of the magnet, d stands for the internal diameter of the magnetized portion inside the gap, and $D_{sat}$ corresponds to the external diameter of said second magnetic circuit which can be greater than D.

6. The electromagnetic one-phase actuator of any one of claims 4 or 5, characterized in that said second magnetic circuit (3) is integral with said rotor (21).

7. The electromagnetic one-phase actuator of any one of preceding claims, characterized in that one at least of said magnetic circuits includes a chamfer or a slanted border along one at least of the polar edges thereof.

8. The electromagnetic one-phase actuator of claim 7, characterized in that each of said sectors of first magnetic circuit includes at least a radial edge having a chamfer which forms with rotor plane an angle between 30° and 60°.

9. The electromagnetic one-phase actuator of the preceding claim, characterizd in that chamfer width is between 1/5 and 1/20 of developped pole length.

10. The electromagnetic one-phase actuator of any one of the preceding claims, characterized in that N is greater than 1, with at least one of both magnetic circuits further including a control coil (27) through which no current passes and which is not influenced by the flux due to the current in the remaining coils.

11. The electromagnetic one-phase actuator of any one of claims 1 to 10, characterized in that one the magnetic members includes a control coil.

Fig. 1

Fig. 2

Fig. 3

8

21

24

9

2

3

22

D

d

23

Fig. 4

28

25

26

8

27

29

Fig. 5

Fig. 6

Fig. 7

Fig. 8

Fig. 9